# EUROPEAN PATENT APPLICATION

(11) **EP 2 426 632 A1**
(43) Date of publication of application: **07.03.2012**
(21) Application number: 09844087.8
(22) Date of filing: 21.08.2009
(51) Int. Cl.: G06Q 30/00

(54) **METHOD AND APPARATUS FOR PROVIDING MULTIPLE ONLINE ADVERTISEMENTS USING LOCATION INFORMATION OF SCROLL BAR**

(30) Priority: 30.04.2009 KR 20090037929
(71) Applicant: Cdnetworks Co., Ltd., Seoul 135-935 (KR)
(72) Inventor: PARK, Jung-Jin, Seongnam-si Gyeonggi-do 463-743 (KR)
(74) Representative: Neobard, William John
(86) International application number: PCT/KR2009/004661
(87) International publication number: WO 2010/126205

(57) **Abstract**

According to an embodiment of the present invention, the present invention includes: providing advertisement providing condition information which is previously set and receiving advertisement providing request information corresponding to the advertisement providing condition information; calculating an advertisement providing rate for the multiple web sites using the advertisement providing condition information and the advertisement providing request information; and transmitting advertisement data to the client in accordance with the advertisement providing rate when the advertisement data transmitting request is received from the client. The advertisement data transmitting request that is received from the client is performed in such a manner that the client receives a web document provided from the web server to determine whether a scroll bar is located in location information included in a tag included in the web document, and requests the advertisement server to transmit the advertisement data when the scroll bar is located in the location information included in the tag.

According to the present invention, if multiple advertisers transmit advertisement providing requests, the advertisers' advertisements can be provided to various web sites or web pages and the like, while the advertisers' advertisement providing requirements are reflected thereupon. In addition, as online advertisements using the location information of scroll bars are provided, advertisers who provide the advertisements can be accurately charged for the advertisements according to the degree of advertisement exposure to users.

## Description

### [Technical Field]

The present invention relates to a method and an apparatus for providing advertisement, and more specifically, to a method and an apparatus for providing multiple on-line advertisements to multiple web sites using information of location of a scroll bar located on a screen of a communication network connection program such as a web browser.

### [Background Art]

As communication networks such as on-line and mobile communication networks are developed, advertisements that have been provided only using broadcasting medium such as television or radio or printed medium such as newspapers or magazines are provided in various formats.

Specifically, in accordance with the development of the communication network, as users of on-line and mobile communication is drastically increased, the advertisement through on-line becomes one of the important advertising means.

The on-line advertisement is provided by displaying advertisement on a specific area such as a banner advertisement of a web site or provided by a pop-up window when a user accesses to a specific web site.

Further, various methods has been provided that extracts a specific word, that is a keyword from words that is input in an on-line search pane by a user or words or sentences included in a specific web page of a web site and provides advertisement data such as a list of the web sites or advertisement contents that match with the extracted keyword.

However, according to the above-mentioned on-line advertisement, it is difficult to figure out whether the advertisement has been exposed to the user or the user has watched the on-line advertisement. Further, if the advertisement is provided by being inserted in the web page, it is also difficult to figure out whether the user has seen a part of the web page in which the advertisement is located, so that it is difficult to figure out whether the advertisement has been exposed to the user.

Further, in the case of the on-line advertisement that is provided by being inserted in the web page, since the advertisement is included in the web page provided to the user, the advertisement may not draw the user's attention.

In order to overcome the above-mentioned disadvantages, the applicants have filed a patent application (Korean Patent Application No. 10-2008-0074375) for a method and an apparatus for providing an on-line advertisement using information of a scroll bar location.

In the meantime, if a plurality of advertisers request to provide the advertisement according to the method for providing the on-line advertisement using information of a scroll bar location, it is demanded to provide the advertisement by efficiently processing the method.

However, if a plurality of advertisers request to provide the advertisement, the requests from the advertisers, for example, the advertisement providing type, advertisement providing time, the price for providing the advertisement may be different for each advertiser. Furthermore, the web sites or web pages to which the advertisements are provided are various. Therefore, it is required to provide advertisement of the advertisers to various web sites or web pages while reflecting the advertisement providing requests from the advertisers.

### [Disclosure]

### [Technical Problem]

In order to solve the known problems, the present invention provides a method and an apparatus for providing multiple on-line advertisements using information of a scroll bar location which is capable of providing advertisement of advertisers to various web sites or web pages while reflecting various advertisement providing requests from the advertisers when the plurality of advertisers request to provide the advertisements.

Other objectives of the present invention can be easily understood by the description of the embodiments below.

### [Technical Solution]

In order to accomplish the objectives, according to an aspect of the present invention, a method for providing an on-line advertisement is provided.

According to an embodiment of the present invention, a method for providing an on-line advertisement that is performed by an advertisement server in an on-line advertisement providing system including a client, a web server, and the advertisement server, includes: (a) providing advertisement providing condition information which is previously set and receiving advertisement providing request information corresponding to the advertisement providing condition information, the advertisement providing condition information including information regarding multiple web sites where the on-line advertisement is provided; (b) calculating an advertisement providing rate for the multiple web sites using the advertisement providing condition information and the advertisement providing request information; and (c) transmitting advertisement data to the client in accordance with the advertisement providing rate when the advertisement data transmitting request is received from the client, wherein the advertisement server receives the advertisement data transmitting request received from the client if scroll bar location information corresponds to advertisement exposure location information by extracting the advertisement exposure location information included in a web document received from the web server by the client and using the scroll bar location information of the web browser on which the extracted advertisement exposure location information and the web document are displayed.

In step (a), the advertisement providing condition information and the advertisement providing request information may include at least one information of a web site on which advertisement is provided, an advertisement providing type, and an advertisement providing time.

In step (b), the advertisement providing rate may be calculated so as to include information regarding a unit price of providing an advertisement and the number of times of providing an advertisement on the multiple web sites.

Step (c) may further include calculating a cost for transmitting the advertisement data by counting the number of times of advertisement data transmission and using the counted number of times.

According to another embodiment of the present invention, a method for providing an on-line advertisement that is performed by an advertisement server in an on-line advertisement providing system including a client, a web server, and the advertisement server, includes: (a) providing advertisement providing condition information which is previously set and receiving advertisement providing request information corresponding to the advertisement providing condition information, the advertisement providing condition information including information regarding multiple web sites where the on-line advertisement is provided; (b) calculating an advertisement providing rate for the multiple web sites using the advertisement providing condition information and the advertisement providing request information; and (c) transmitting advertisement data to the client in accordance with the advertisement providing rate when the advertisement data transmitting request is received from the client, wherein the transmitting of the advertisement data to the client is performed if scroll bar location information received corresponds to advertisement exposure location information by receiving the advertisement exposure location information included in a web document received by the client and receiving the scroll bar location information of a web browser on which the web document is displayed.

In step (a), the advertisement providing condition information and the advertisement providing request information may include at least one information of a web site on which advertisement is provided, an advertisement providing type, and an advertisement providing time.

In step (b), the advertisement providing rate may be calculated so as to include information regarding a unit price of providing an advertisement and the number of times of providing an advertisement on the multiple web sites.

Step (c) may further include calculating a cost for transmitting the advertisement data by counting the number of times of advertisement data transmission and using the counted number of times.

According to another aspect of the present invention, an apparatus for providing an on-line advertisement is provided.

According to an embodiment of the present invention, an apparatus for providing an on-line advertisement includes: an advertisement registering unit configured to provide advertisement providing condition information which is previously set and store advertisement providing request information received in response to the advertisement providing condition information, the advertisement providing condition information including information regarding multiple web sites where the on-line advertisement is provided; an advertisement providing information creating unit configured to calculate an advertisement providing rate for the multiple web sites using the advertisement providing condition information and the advertisement providing request information stored in the advertisement registering unit; and an advertisement providing unit configured to transmit advertisement data to the client in accordance with the advertisement providing rate calculated in the advertisement providing information creating unit when the advertisement data transmitting request is received from the client, wherein the advertisement server receives the advertisement data transmitting request received from the client if scroll bar location information corresponds to advertisement exposure location information by extracting the advertisement exposure location information included in a web document received from the web server by the client and using the scroll bar location information of the web browser on which the extracted advertisement exposure location information and the web document are displayed.

The advertisement providing condition information and the advertisement providing request information may include at least one information of a web site on which advertisement is provided, an advertisement providing type, and an advertisement providing time.

The advertisement providing information creating unit may calculate the advertisement providing rate so as to include information regarding a unit price of providing an advertisement and the number of times of providing an advertisement on the multiple web sites.

The apparatus may further include a charging unit configured to count the number of times of advertisement data transmission and calculate a cost for transmitting the advertisement data by using the counted number of times.

According to another embodiment of the present invention, an apparatus for providing an on-line advertisement includes: an advertisement registering unit configured to provide advertisement providing condition information which is previously set and store advertisement providing request information received in response to the advertisement providing condition information, the advertisement providing condition information including information regarding multiple web sites where the on-line advertisement is provided; an advertisement providing information creating unit configured to calculate an advertisement providing rate for the multiple web sites using the advertisement providing condition information and the advertisement providing request information stored in the advertisement registering unit; and an advertisement providing unit configured to transmit advertisement data to the client in accordance with the advertisement providing rate calculated in the advertisement providing information creating unit when the advertisement data transmitting request is received from the client, wherein the advertisement data is transmitted to the client if scroll bar location information received corresponds to advertisement exposure location information by receiving the advertisement exposure location information included in a web document received by the client and receiving the scroll bar location information of a web browser on which the web document is displayed.

The advertisement providing condition information and the advertisement providing request information may include at least one information of a web site on which advertisement is provided, an advertisement providing type, and an advertisement providing time.

The advertisement providing information creating unit may calculate the advertisement providing rate so as to include information regarding a unit price of providing an advertisement and the number of times of providing an advertisement on the multiple web sites.

The apparatus may further include a charging unit configured to count the number of times of advertisement data transmission and calculate a cost for transmitting the advertisement data by using the counted number of times.

According to yet another aspect of the present invention, a recording medium that records a program that implements a method for providing an on-line advertisement is provided.

According to an embodiment of the present invention, a recording medium that records a program that implements a method for providing an on-line advertisement that is performed by an advertisement server in an on-line advertisement providing system including a client, a web server, and the advertisement server is provided. The method includes: (a) providing advertisement providing condition information which is previously set and receiving advertisement providing request information corresponding to the advertisement providing condition information, the advertisement providing condition information including information regarding multiple web sites where the on-line advertisement is provided; (b) calculating an advertisement providing rate for the multiple web sites using the advertisement providing condition information and the advertisement providing request information; and (c) transmitting advertisement data to the client in accordance with the advertisement providing rate when the advertisement data transmitting request is received from the client, wherein the advertisement server receives the advertisement data transmitting request received from the client if scroll bar location information corresponds to advertisement exposure location information by extracting the advertisement exposure location information included in a web document received from the web server by the client and using the scroll bar location information of the web browser on which the extracted advertisement exposure location information and the web document are displayed.

In step (a), the advertisement providing condition information and the advertisement providing request information may include at least one information of a web site on which advertisement is provided, an advertisement providing type, and an advertisement providing time.

In step (b), the advertisement providing rate may be calculated so as to include information regarding a unit price of providing an advertisement and the number of times of providing an advertisement on the multiple web sites.

Step (c) may further include calculating a cost for transmitting the advertisement data by counting the number of times of advertisement data transmission and using the counted number of times.

According to another embodiment of the present invention, a recording medium that records a program that implements a method for providing an on-line advertisement that is performed by an advertisement server in an on-line advertisement providing system including a client, a web server, and the advertisement server is provided. The method includes: (a) providing advertisement providing condition information which is previously set and receiving advertisement providing request information corresponding to the advertisement providing condition information, the advertisement providing condition information including information regarding multiple web sites where the on-line advertisement is provided; (b) calculating an advertisement providing rate for the multiple web sites using the advertisement providing condition information and the advertisement providing request information; and (c) transmitting advertisement data to the client in accordance with the advertisement providing rate when the advertisement data transmitting request is received from the client, wherein the transmitting of the advertisement data to the client is performed if scroll bar location information received corresponds to advertisement exposure location information by receiving the advertisement exposure location information included in a web document received by the client and receiving the scroll bar location information of a web browser on which the web document is displayed.

In step (a), the advertisement providing condition information and the advertisement providing request information may include at least one information of a web site on which advertisement is provided, an advertisement providing type, and an advertisement providing time.

In step (b), the advertisement providing rate may be calculated so as to include information regarding a unit price of providing an advertisement and the number of times of providing an advertisement on the multiple web sites.

Step (c) may further include calculating a cost for transmitting the advertisement data by counting the number of times of advertisement data transmission and using the counted number of times.

### [Advantageous Effects]

As described above, a method and an apparatus for providing multiple on-line advertisements using information of a scroll bar location according to the present invention can provide advertisement of advertisers to various web sites or web pages while reflecting various advertisements providing requests from the advertisers when the plurality of advertisers request to provide the advertisements.

### [Description of Drawings]

FIG. 1 is a conceptual diagram illustrating components for a system to which a method for providing multiple on-line advertisements using information of a scroll bar location according to an embodiment of the present invention is applied.
FIG. 2 is a flow chart illustrating procedures in which a method for providing multiple on-line advertisements using information of a scroll bar location according to an embodiment of the present invention is applied.
FIG. 3 is a view illustrating an example of a table recorded with information of the number of advertisements exposed on the web sites, which can be used for applying a method for providing multiple on-line advertisements using information of a scroll bar location according to an embodiment of the present invention.
FIG. 4 is a view illustrating an example of a table recorded with information of advertisement providing request site of advertisers that can be used for applying a method for providing multiple on-line advertisements using information of a scroll bar location according to an embodiment of the present invention.
FIG. 5 is a view illustrating an example of a configuration of an advertisement server when the multiple on-line advertisements using the information of a scroll bar location according to an embodiment of the present invention are provided in the advertisement server.
FIG. 6 is a flow chart illustrating procedures in which a method for providing an on-line advertisement using information of a scroll bar location used according to an embodiment of the present invention is embodied.
FIG. 7 is a view illustrating an example of the procedures in which a method for providing an on-line advertisement using information of a scroll bar location used according to an embodiment of the present invention is embodied.
FIG. 8 is a view illustrating an example of a configuration of an advertisement providing unit that provides an on-line advertisement using information of a scroll bar location used according to an embodiment of the present invention.

### [Best Mode]

The inventive concept is described more fully hereinafter with reference to the accompanying drawings, in which embodiments of the inventive concept are shown. This inventive concept may, however, be embodied in many different forms and should not be construed as limited to the embodiments set forth herein. Rather, these embodiments are provided so that this disclosure will be thorough and complete, and will fully convey the scope of the inventive concept to those skilled in the art.

In the drawings, the size and relative sizes of layers and regions may be exaggerated for clarity. Like numbers refer to like elements throughout. If it is determined that the detailed description of the related arts may cloud the gist of the present invention, description thereof may be omitted.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the inventive concept.

The terminology used herein is for the purpose of describing particular embodiments only and is not intended to be limiting of the inventive concept. As used herein, the singular forms "a", "an" and "the" are intended to include the plural forms as well, unless the context clearly indicates otherwise.

As used herein, the term "and/or" includes any and all combinations of one or more of the associated listed items.

It will be understood that when an element or layer is referred to as being "on", "connected to", "coupled to", or "adjacent to" another element or layer, it can be directly on, connected, coupled, or adjacent to the other element or layer, or intervening elements or layers may be preset. In contrast, when an element is referred to as being "directly on," "directly connected to", "directly coupled to", or "immediately adjacent to" another element or layer, there are no intervening elements or layers preset.

It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this inventive concept belongs.

It will be further understood that terms, such as those defined in commonly used dictionaries, should be interpreted as having a meaning that is consistent with their meaning in the context of the relevant art and/or the present specification and will not be interpreted in an idealized or overly formal sense unless expressly so defined herein.

Hereinafter, embodiments of the present invention will be described with reference to the accompanying drawings, and same or corresponding elements are denoted by the same reference numerals and description thereof will be omitted.

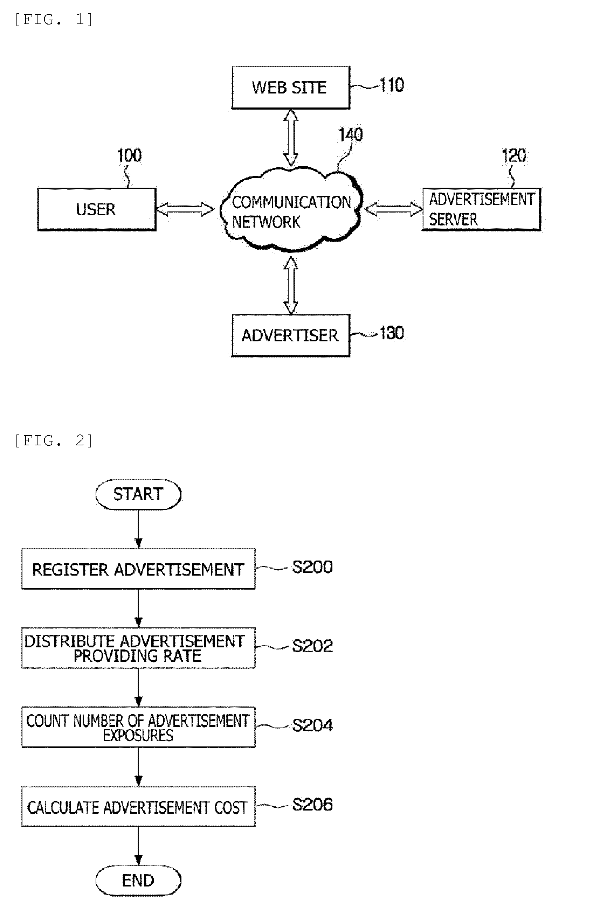

Referring to FIG. 1, components for a system to which a method for providing multiple on-line advertisements using information of a scroll bar location according to an embodiment of the present invention is applied will be described.

FIG. 1 is a conceptual diagram illustrating components for a system to which a method for providing multiple on-line advertisements using information of a scroll bar location according to an embodiment of the present invention is applied.

As shown in FIG. 1, the system to which the on-line advertisement providing method according to the embodiment of the present invention is applied includes a user 100, a web site 110, an advertisement server 120, and an advertiser 130.

Even though a user 100 is conceptually shown in FIG. 1, it is obvious that the user 100, the web site 110, and the advertiser 130 may refer to devices such as a client or a server.

For example, the user 100 may be not only a person who reads the received web document and advertisement data, but also a device including a user's personal computer, a cell phone, and a wireless terminal such as a personal digital assistant (PDA).

Hereinafter, for the convenience of the description, both the user 100 and the device used by the user will be referred to as the user 100 without distinction.

Meanwhile, the user 100 is connected to the web site 110 and the advertisement server 120 through a communication network 140 to receive a web document such as a web page provided by the web site 110 and advertisement data provided by the advertisement server 120.

The user 100, preferably the device for the user 100 may include a web browser (not shown) that allows the user to access the web site 110 and an application (not shown) that reproduces the advertisement data. The web browser and the application are provided in the device for the user 100 as a program format.

There is no limitation for the device for the user 100 as long as the device can have a communication function to access the web site 110 and the advertisement server 120, install a program that is capable of reproducing the received advertisement data and include a display screen onto which the reproduced advertisement data is output.

Meanwhile, It is obvious that the advertisement data in the present invention may include any type or any kind of advertisements, such as advertisement that is provided as a text format, an image format, or a video format and advertisement that is provided as a voice format, and advertisement that is provided as the text, the image, and the video separately from or together with the voice.

The user 100 is connected to the web site 110 and the advertisement server 120 through the communication network 140. The communication network 140 in the present invention includes on-line and mobile communication networks. The on-line includes worldwide open network architecture that provides TCP/IP protocol and various services included in the upper layer protocol of the TCP/IP such as HTTP (hyper text transfer protocol), Telnet, FTP (file transfer protocol), DNS (domain name system), SMTP (simple mail transfer protocol), SNMP (simple network management protocol), and NFS (network file service).

Further, the mobile communication network further includes components such as an access gateway and PDSN (packet data serving node) that allows transmission and reception of wireless packet data, in addition to a base station (BS), a mobile telephone switching office (MTSO), and a home location register (HLR).

The web site 110 provides a web document such as a web page to which the advertisement is provided to the user 100.

If the advertisement server 120 receives an advertisement data transmission signal according to tag information in the web page provided through the web site 110, the advertisement server 120 transmits predetermined advertisement data to the user 100.

In the meantime, the advertisement server 120 may be connected with a database in which advertisement data, which is transmitted to the user 100, is stored, and the advertisement data that is transmitted to the user 100 may be reproduced in an application installed at the user 100 side.

The advertiser 130 requests the advertisement server 120 to provide an advertisement including advertisement providing requests in order to provide advertisement in the web page provided through the web site 110.

In the meantime, even though the advertiser 130 is conceptually shown in FIG. 1, it may be understood that the advertisement providing request by the advertiser 130 may be performed through the communication network 140 using a separate device by the advertiser 130, which is same as the user 100 as described above.

For the convenience of the description, FIG. 1 shows only one for respective components, but the number of components may be plural.

In the on-line advertisement providing system, if the advertiser 130 who wants to provide an advertisement through the web page provided on the web site 110 accesses the advertisement server 120 to request to provide the advertisement, the advertisement is provided in response to the advertisement providing request by the advertiser 130.

However, there are the multiple advertisers 130 and the multiple web sites 110, and the conditions that the advertisement is provided and the advertisement providing requests of the advertiser 130 are different. Therefore, it is difficult to provide the advertisement by reflecting the various conditions and requests.

According to the embodiment, if the multiple advertisers 130 request the multiple web sites 110 to provide advertisement through the web pages, information regarding an advertisement providing condition which is previously set is provided to the advertiser 130 through the advertisement server 120 and the advertisement is provided according to the advertisement request information input by the advertiser 130.

In the meantime, the information regarding an advertisement providing condition which is previously set may include the number of advertisement exposures of the web sites 110 and information regarding a unit price of providing an advertisement with respect to advertisement provided using a scroll bar location according to an embodiment of the present invention.

Further, if the advertiser 130 registers the advertisement providing request information including a web site 110 on which the advertiser 130 wants to provide an advertisement , an advertisement providing type, an advertisement providing time and the like according to the advertisement providing condition, the advertisement is provided on the respective web sites 110 according to the advertisement providing condition provided by the advertisement server 120 and the advertisement providing request information registered by the advertiser.

Hereinafter, referring to FIG. 2, procedures in which a method for providing multiple on-line advertisements using information of a scroll bar location according to an embodiment of the present invention is applied will be described.

FIG. 2 is a flow chart illustrating procedures in which a method for providing multiple on-line advertisements using information of a scroll bar location according to an embodiment of the present invention is applied.

As shown in FIG. 2, according to the method for providing multiple on-line advertisements using information of a scroll bar location according to an embodiment of the present invention, the advertiser 130 accesses the advertisement server 120 to register a desired advertisement (5200) .

The advertisement registration may include the registration of the advertisement data that the advertiser 130 wants to provide as described above, and may also include the advertisement providing request information. The advertisement providing request information may include various information such as a web site 110 to which the advertisement is desired to be provided, an advertisement providing type, selection of an advertisement providing time as described above.

The advertisement providing type included in the advertisement providing request information is, for example, information for selecting whether to provide simple text or image type advertisement or video type advertisement.

Also, the selection of advertisement providing time is information to select the time when the advertiser 130 wants to actually provide the advertisement.

In the meantime, if the multiple advertisers 130 receive advertisement providing request information, for example, the same advertisement providing type of advertisement providing request may be made through the same web site 110 at the same time.

In this case, according to the embodiment of the present invention, using the advertisement providing request information and the advertisement providing condition information, an advertisement providing rate is calculated to distribute the advertisement providing request according to the calculated advertisement providing rate (S202).

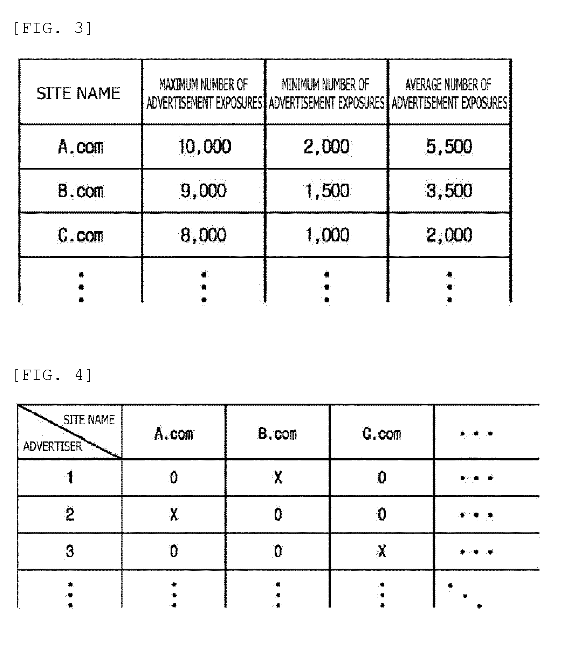

FIG. 3 is a view illustrating an example of a table recorded with information of the number of the advertisements exposed on the web sites, which can be used for applying a method for providing an on-line advertisement using information of a scroll bar location according to an embodiment of the present invention.

As shown in FIG. 3, the maximum number of advertisement exposures and the minimum number of advertisement exposures for every web site 110 and the average number of advertisement exposures for every web site 110 are calculated, and then included in the advertisement providing condition information. Further, according to the information regarding the number of advertisement exposures, the unit price of providing an advertisement may be determined in advance.

In the example shown in FIG. 3, since the maximum number of advertisement exposures, the minimum number of advertisement exposures, and the average number of advertisement exposures for A.com site are the highest, the advertisers 130 will consider selecting the providing of advertisement on the A.com site as top priority. Therefore, one time unit price for providing an advertisement on the A.com site may be set to be the highest, but this invention is not limited thereto.

To the contrary, if the unit price for providing an advertisement is set to the highest, some advertisers 130 may want to provide their advertisement to a B.com site whose unit price of providing an advertisement is relatively lower than the A.com site.

Therefore, the advertisement providing condition information may be provided to the advertisers 130 in advance, and then advertisement providing request information corresponding to the advertisement providing condition information may be received from the advertisers 130.

FIG. 4 is a view illustrating an example of a table recorded with information of advertisement providing request web site of advertisers that can be used for applying a method for providing an on-line advertisement using information of a scroll bar location according to an embodiment of the present invention.

As shown in FIG. 4, the individual advertisers 130 may select a web site 110 requested to provide the advertisement according to the advertisement providing condition information provided through the advertisement server 120.

In the meantime, the advertisement providing rate that is calculated using the advertisement providing condition information and the advertisement providing request information received from the advertisers 130 may be calculated using various methods.

For example, an advertiser 1 may request advertisement exposure on the A.com site five times and another advertiser 2 may request advertisement exposure on the A.com site 20 times.

However, if the available number of advertisement exposures on the A.com site is 20, only the advertiser 2 who makes the most advertisement providing request and will pay the greatest amount of money for the advertisement can be allowed to provide the advertisement on the A.com site 20 times. Otherwise, it is further possible to set to provide an advertisement for the advertiser 1 four times and to provide an advertisement for the advertiser 2 16 times in accordance with the ratio.

It is obvious that the advertisement providing rate may be calculated and applied by various methods depending on the settings. Further, if the advertisement providing rate is calculated by using the advertisement providing condition information and the advertisement providing request information received from the advertisers 130 in response to the advertisement providing condition information to be applied to provide the advertisement to the respective web sites 110, there is no further limitation.

Further, in the above-described example, even though it is described that the advertisement providing rate indicates only the number of times of providing the advertisement, the advertisement providing rate may be variously calculated and set according to various information such as the advertisement providing type, the advertisement providing time, etc.

In the meantime, when the number of times of providing the advertisement is distributed in accordance with the advertisement providing rate to actually provide the advertisement on the respective web sites 110, the number of advertisement exposures is counted (5204).

Further, the cost for advertisement is charged or calculated based on the counted number of advertisement exposures (S206).

Generally, even though the term "charged" refers to deferred payment, and the term "calculated" refers to prepayment, in this specification, even in a case that the advertisement is provided and the cost for providing the advertisement is charged according to the number of actual advertisement providing exposures, or in a case that the cost for providing the advertisement is paid in advance and the prepayment is calculated according to the number of actual advertisement providing exposures, actual payment is made. Therefore, the term "charged" is used for both cases.

According to the method for providing on-line advertisement using information of a scroll bar location according to the embodiment, if multiple advertisers 130 register the advertisement providing request information corresponding to the advertisement providing condition information on the advertisement server 120, the advertisement is provided on the individual web sites 110 according to the advertisement providing rate, and the cost for providing an advertisement is charged according to the number of times of actual exposure of the advertisement to the user 100.

In the meantime, an example of the method for providing multiple on-line advertisements using the information of the scroll bar location according to the embodiment of the present invention will be described.

As shown in FIGS. 3 and 4, it is assumed that the on-line advertisements are provided through three sites, A.com, B.com, and C.com using the information of a scroll bar location used in the embodiment. Further, it is assumed that the advertisers 1, 2 and 3 access the advertisement server 120 according to the embodiment of the present invention to request to provide the advertisement.

In the meantime, the information regarding the number of advertisement exposures on the individual web sites 110 may be counted, calculated, and stored in advance as shown in FIG. 3.

For the convenience of the description, even though the term "number of advertisement exposures on the web site 110" is used, if necessary, the number of advertisement exposures may be counted for every web page provided from the web site 110, and then the information may be stored to be provided to the advertisers 130.

In the meantime, for example, as shown in FIG. 4, it is assumed that the advertiser 1 requests the web sites of A.com and C.com to provide the advertisement, the advertiser 2 requests the web sites of B.com and C.com to provide the advertisement, and the advertiser 3 requests the web sites of A.com and B.com to provide the advertisement.

In the meantime, since the web site A.com has the highest number of advertisement exposures, for example, it is assumed that the cost is charged whenever the advertisement is exposed once.

Further, when the advertiser 1 requests A.com to expose the advertisement ten times, and requests the web site of C.com to expose the advertisement five times, the actual advertisement may be provided on A.com only ten times, but provided on C.com only once.

In this case, the advertisement for the advertiser 1 can be additionally provided on A.com so that the number of advertisement exposures, four times, that have been not provided on the web site of C.com are provided, for example, on A.com.

As described above, the advertisement for the advertiser 1 may be additionally provided on A.com in accordance with the advertisement providing rate calculated by using the advertisement providing condition information and the advertisement providing request information input by the advertiser 130 in accordance with the advertisement providing condition information.

In the meantime, the unit price of providing an advertisement and the cost for providing the advertisement may be variously set in accordance with the number of advertisement exposures, the advertisement providing type, and the advertisement providing time on the web site 110.

For example, in the above embodiment, since the web site A.com has the highest number of advertisement exposures, the unit price of providing an advertisement becomes relatively higher.

Therefore, according to the embodiment of the present invention, various advertisement providing conditions and the advertisement providing requests of the advertisers 130 are reflected to charge the advertisement cost only when the advertisement is actually exposed to the users 100. Further, the advertisement is distributed and provided for every web site in accordance with the advertisement providing requests by the advertisers 130. As a result, the advertisers may be guaranteed that the advertisement is surely provided.

In the meantime, the on-line advertisement providing method and a charging method according to the above-described embodiment of the present invention may be implemented as a program and stored in a computer readable medium (CD-ROM, RAM, ROM, floppy disk, hard disk, and photo magnetic disk, etc.).

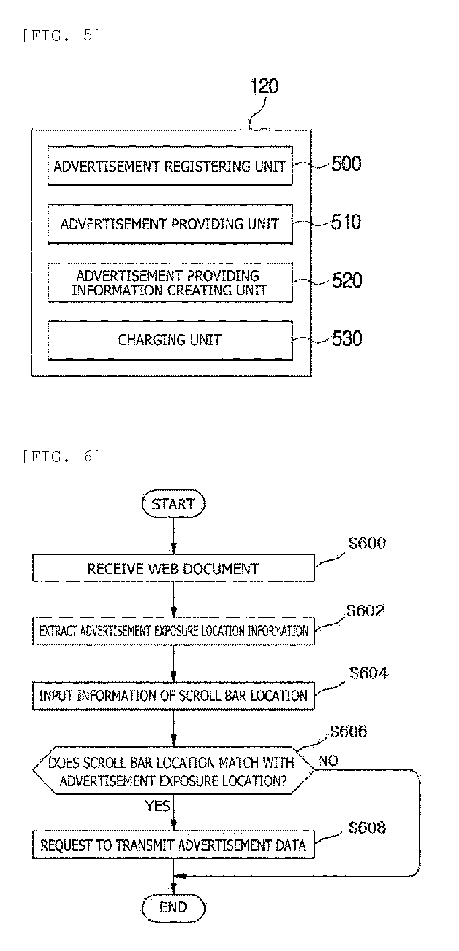

FIG. 5 is a view illustrating an example of a configuration of an advertisement server 120 when the multiple on-line advertisements using the information of a scroll bar location according to an embodiment of the present invention are provided in the advertisement server 120.

As shown in FIG. 5, the advertisement server 120 according to an embodiment may include an advertisement registering unit 500, an advertisement providing unit 510, an advertisement providing information creating unit 520, and a charging unit 530.

The advertisement registering unit 500 stores advertisement providing request information accessed and input by the advertiser 130 in accordance with a previously set advertisement providing condition information.

The advertisement providing unit 510 transmits advertisement data to the user 100 and the advertisement providing information creating unit 520 calculates an advertisement providing rate calculated in accordance with the previously set advertisement providing condition information and the advertisement providing request information input by the advertiser 130.

The advertisement providing unit 510 transmits advertisement data to the user 100 in accordance with the advertisement providing rate calculated in the advertisement providing information creating unit 520.

The charging unit 530 calculates the cost for providing the advertisement using the number of times of providing the advertisement to the user 100, that is, the information on the number of times of advertisement exposure. Further, the charging unit 530 may have an additional function of automatically transmitting the billing statement for the advertisement cost to the advertiser 100).

In the meantime, in order to embody the on-line advertisement providing method according to the embodiment, it is required to accurately expose the advertisement to the user 100. Further, in order to satisfy the requirement, according to the embodiment, the advertisement is displayed to the user 100 using the information of the scroll bar location as described above.

When the advertisement is displayed to the user 100 using the information of the scroll bar location, if the location where the advertisement is provided on the web page is determined and set in advance and the scroll bar of the web browser is located in a predetermined location, the corresponding information is received by the advertisement server 120 and the advertisement server 120 transmits the advertisement data.

The client 100 which is a user 100 transmits only information of the scroll bar location on the web browser to the advertisement server 120. Further, if the scroll bar location matches the location where the advertisement is provided, the client 100 transmits the advertisement data using the location information that allows the advertisement on the web page which the advertisement server 120 can receive from the web site 110 or the client 100 to be provided.

The information regarding the location where the advertisement is provided is hereinafter referred to as advertisement exposure location information, and the advertisement exposure location information may be extracted and the advertisement data may be received or transmitted by adding tags to the web document and using the added tags.

In the meantime, the client 100 determines whether the advertisement needs to be provided using the information of the scroll bar location on the web browser and the advertisement exposure location information on the web page to request the advertisement server 120 to request the advertisement server 120 to transmit advertisement data. The advertisement server 120 may transmit the advertisement data to the client 100 in response to the request.

Furthermore, the client 100 may transmit the information of the scroll bar location or the advertisement exposure location information on the web page to the advertisement server 120, and the advertisement server 120 may extract or receive the advertisement exposure location information to transmit the advertisement data by comparing the advertisement exposure location information with the information of the scroll bar location.

In the meantime, if the extraction of the advertisement exposure location information and the comparison of the advertisement exposure location information with the information of the scroll bar location are performed by the client 100, the client 100 may have an advertisement module (not shown) to perform the functions, and the advertisement module may be automatically downloaded to the client 100 through the object tag from the web page provided by the web server 116. The advertisement module may be installed as ActiveX control.

Further, the advertisement module (not shown) may be provided to the client in a script format which can be operated on the web browser, and the advertisement module providing method or format is not limited to a specific one.

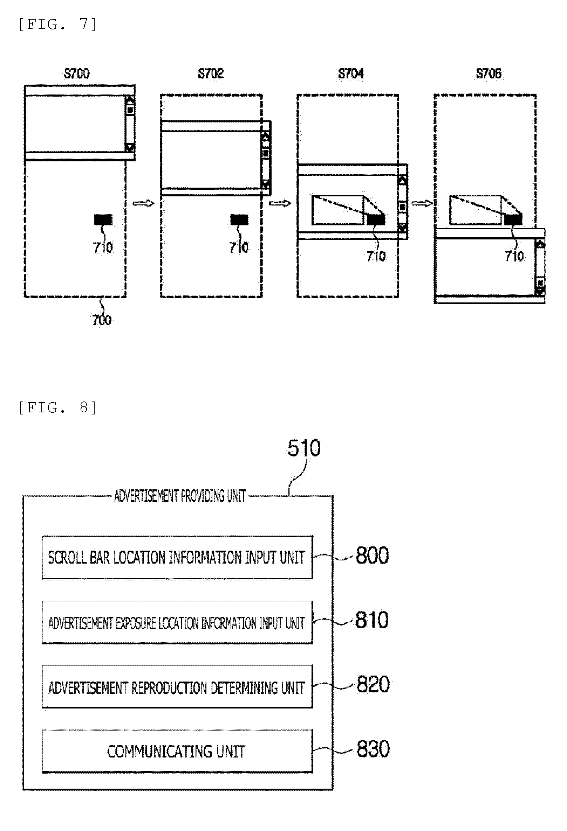

In the meantime, the process of reproducing the advertisement data using the information of the scroll bar location according to an embodiment of the present invention will be described in detail with reference to FIGS. 6 and 7.

Hereinafter, with reference to FIGS. 6 and 7, a method for providing an on-line advertisement using information of a scroll bar location that embodies the method for providing multiple on-line advertisements according to an embodiment of the present invention.

FIG. 6 is a flow chart illustrating procedures in which a method for providing an on-line advertisements using information of a scroll bar location used according to an embodiment of the present invention is embodied.

In FIG. 6, according to the above-described embodiment, it is assumed that the client 100 extracts the advertisement exposure location information and the information of the scroll bar location on the web browser and requests only the advertisement data to the advertisement server.

As shown in FIG. 6, the web document provided through the web site 110 is transmitted to the client 100 and the client 100 receives the web document (S600).

A part or all of the received web page is provided through a screen of the web browser installed in the client 100.

Location information that allows the advertisement to be exposed on the received web page is extracted (S602).

In the meantime, when the user moves the web page up and down or right and left in a user interface provided from the web browser using the scroll bar to identify the contents on the web page, the information of the scroll bar location is preferably input to the advertisement module which may be installed in the client 100 according to the embodiment of the present invention (S604).

In the meantime, as described above, the advertisement module may be provided as a script format or installed as ActiveX Control format which is a separate program.

Next, it is determined whether the scroll bar is located in a location where the input information of the scroll bar location is set in advance, that is, a location on the web page where a tag exists (S606). If the scroll bar is located in the location on the web page where the tag exists, the tag included on the web page requests the advertisement server 120 to transmit the advertisement data (S608).

In the meantime, the tag may request the advertisement server 120 to transmit the advertisement data not only when the scroll bar is located in the location on the web page where the tag exists, but when a portion on the web page where the tag exists is exposed on the screen of the web browser.

For example, it is possible to provide the advertisement when the portion on the web page where the tag exists, that is, a portion of the web page including the advertisement exposure location is exposed in accordance with the movement of the scroll bar, or only when the scroll bar location exactly matches with the advertisement exposure location.

The advertisement exposure location information may be location information on the web page to which a tag is inserted, for example, coordinate information on the web page to which the tag is inserted or location information of a pixel of an image or a text of the web page to which the tag is inserted (horizontal pixel and/or vertical pixel), and more preferably, information including information of coordinate values of the pixel.

In the meantime, the advertisement server 120 transmits the previously set advertisement data, so that the advertisement data is displayed and reproduced on the display screen of the client 100.

Further, if the scroll bar is located outside of the web page where the tag exists, the advertisement server 120 may stop transmitting or reproducing the advertisement data.

For example, if a portion that the advertisement is provided is outside of the screen of the web browser while the user scrolls the web page, the advertisement is not provided to the user any more.

It is obvious that the interruption of the advertisement data transmission and reproduction may be performed by various methods, for example, stopping transmitting the advertisement data in the advertisement server 120 in response to the request of the client 100 or stopping reproducing the advertisement data in the client 100 regardless of stopping transmitting the advertisement data in the advertisement server 120.

In the meantime, if the advertisement on the web page is provided as a video format, a still image or an image of the video is provided and then the video may be reproduced in accordance with the location of the scroll bar.

Further, the advertisement is provided as a text, and then an image or a video may be reproduced in accordance with the location of the scroll bar. It is also obvious that nothing is displayed on the web page and then a text, an image or a video may be displayed or reproduced in accordance with the location of the scroll bar.

In addition, the advertisement may be reproduced in a predetermined area on the web page or provided through a separate window such as a pop-up window other than the web page.

Furthermore, as described above, the reproducing of the advertisement may include displaying an image or a text or reproducing a video or an audio.

Moreover, if the image or the text is included on the web page to be provided, as described above, location information of a pixel where the image or text advertisement data is reproduced may be included in the advertisement exposure location information.

Next, a procedure of implementing the on-line advertisement providing method using the information of the scroll bar location that allows multiple on-line advertisements to be provided according to the embodiment of the present invention will be described in detail with reference to FIG. 7.

FIG. 7 is a view illustrating an example of the procedures in which the on-line advertisement providing method using the information of the scroll bar location that allows multiple on-line advertisements to be provided through on-line according to an embodiment of present the invention is embodied.

As shown in FIG. 7, in step S700, a screen that a user initially encounters through a screen of the web browser is a web page that is received through a web server. As shown in FIG. 7, an advertisement exposure location 710 is previously set and included in the entire web page 700.

As shown in step S702, a user moves the web page 700 up and down or right and left using a scroll bar to see the web page 700.

In step S704, if a location 710 where the advertisement is exposed on a web page that the user sees, that is, a web page that is exposed to the user, that is, a location to which a tag is inserted is exposed to the user through a screen of the web browser, the advertisement is exposed to the user.

As shown in FIG. 7, even though the advertisement is displayed to the user by enlarging the corresponding advertisement, but the method of providing the advertisement is not limited.

In the meantime, as described above, a portion to which the tag is inserted, that is, the advertisement exposure location may be exposed to the user through the screen of the web browser not only when the scroll bar is located in the portion to which the tag is inserted, but also, as described above, when a portion to which a tag of an implicit object is inserted is exposed to the user through the screen of the web browser.

In step S706, if the advertisement exposure location on the web page that the user sees disappears from the web page that is displayed to the user, the advertisement exposure is stopped.

However, as shown in step S706, when the advertisement exposure location disappears from the web page that the user sees, and the advertisement exposure is stopped, it is obvious that a portion including the advertisement may be located at the uppermost edge of the web page or excluded from the web page by setting the advertisement exposure method on the web page.

As shown in FIG. 7, according to the method for providing an advertisement using the information of the scroll bar location according to the embodiment of the present invention, the advertisement is provided only when a corresponding portion of the web page is exposed to the user or the scroll bar is located in a predetermined location while the user sees the web page. Therefore, it is possible to increase the interest of the user for the advertisement.

Further, since the advertisement is exposed only when the user sees the web page, it is possible to easily measure the advertisement effect.

Hereinafter, when the client 100 transmits only the information of the scroll bar location on the web browser and the advertisement server 120 provides the advertisement according to determining whether to provide the advertisement, a configuration of an advertisement providing unit 510 that provides an advertisement in the advertisement server 120 will be described with reference to FIG. 8.

FIG. 8 is a view illustrating a configuration of an advertisement providing unit 510 that may be included in the advertisement server 120 according to an embodiment of the present invention.

According to the embodiment of the present invention, the advertisement providing unit 510 may include a scroll bar location information input unit 800, a web page tag information input unit 810, an advertisement reproduction determining unit 820, and a communicating unit 830.

First, the scroll bar location information input unit 800 receives from the client 100 location information of a scroll bar which is located on the web browser window and may move the screen up and down or right and left.

The web page tag information input unit 810 receives from the client 100 or the web site 110 advertisement exposure location information included in the web document that is received from the web site 100 to the client 100 and provided through the web browser or tag information in the web document that allows the advertisement to be provided.

The advertisement reproduction determining unit 820 determines whether the location of the scroll bar matches with the advertisement exposure location in accordance with the information of the scroll bar location input from the scroll bar location information input unit 810 and the tag information input from the web page tag information input unit 820 thereby determining whether to transmit the advertisement data from the advertisement server 120 to the client 100. The determination is the same as the determination whether the advertisement data is reproduced by the client 100.

Further, in response to the determination in the advertisement reproduction determining unit 820, if the advertisement needs to be provided, the advertisement data is transmitted to the client 100 and the transmitted advertisement data is reproduced in the client 100.

The communicating unit 830 receives the information of the scroll bar location and the web page tag information, that is, the advertisement exposure location information and transmits the advertisement data to the client 100.

In the meantime, the client 100 may determine whether the advertisement is provided using the information of the scroll bar location on the web browser and the advertisement exposure location information on the web page and request the advertisement server 120 only to transmit advertisement data.

In this case, it is obvious that the functions of the scroll bar location information input unit 400, the web page tag information input unit 410, and the advertisement reproduction determining unit 420 in FIG. 8 may be included in the client 100, and these functions may be included in the above-mentioned advertisement module to be installed in the client 100 as a program.

Meanwhile, in the above description, even though the advertisement providing unit 510 that provides the advertisement is included in the advertisement server 120, it is obvious that the advertisement providing unit 510 may be configured as a separate device or embodied by installing in the advertisement server 120 a program where the method for providing an on-line advertisement using the information of the scroll bar location used in the embodiment is implemented.

While the embodiment of the present invention has been described using specific terms, such description is for illustrative purposes only, and it will be obvious to those skilled in the art that various changes, modifications, and additions may be made without departing from the spirit or scope of the following claims.

## Claims

1. A method for providing an on-line advertisement that is performed by an advertisement server in an on-line advertisement providing system including a client, a web server, and the advertisement server, comprising:
(a) providing advertisement providing condition information which is previously set and receiving advertisement providing request information corresponding to the advertisement providing condition information, the advertisement providing condition information including information regarding multiple web sites where the on-line advertisement is provided;
(b) calculating an advertisement providing rate for the multiple web sites using the advertisement providing condition information and the advertisement providing request information; and
(c) transmitting advertisement data to the client in accordance with the advertisement providing rate when the advertisement data transmitting request is received from the client,
wherein the advertisement server receives the advertisement data transmitting request received from the client if scroll bar location information corresponds to advertisement exposure location information by extracting the advertisement exposure location information included in a web document received from the web server by the client and using the scroll bar location information of the web browser on which the extracted advertisement exposure location information and the web document are displayed.

2. A method for providing an on-line advertisement that is performed by an advertisement server in an on-line advertisement providing system including a client, a web server, and the advertisement server, comprising:
(a) providing advertisement providing condition information which is previously set and receiving advertisement providing request information corresponding to the advertisement providing condition information, the advertisement providing condition information including information regarding multiple web sites where the on-line advertisement is provided;
(b) calculating an advertisement providing rate for the multiple web sites using the advertisement providing condition information and the advertisement providing request information; and
(c) transmitting advertisement data to the client in accordance with the advertisement providing rate when the advertisement data transmitting request is received from the client,
wherein the transmitting of the advertisement data to the client is performed if scroll bar location information received corresponds to advertisement exposure location information by receiving the advertisement exposure location information included in a web document received by the client and receiving the scroll bar location information of a web browser on which the web document is displayed.

3. The method according to claim 1 or 2, wherein in step (a), the advertisement providing condition information and the advertisement providing request information includes at least one information of a web site on which advertisement is provided, an advertisement providing type, and an advertisement providing time.

4. The method according to claim 1 or 2, wherein in step (b), the advertisement providing rate is calculated so as to include information regarding a unit price of providing an advertisement and the number of times of providing an advertisement on the multiple web sites.

5. The method according to claim 1 or 2, wherein step (c) further comprises
calculating a cost for transmitting the advertisement data by counting the number of times of advertisement data transmission and using the counted number of times.

6. An apparatus for providing an on-line advertisement, comprising:
an advertisement registering unit configured to provide advertisement providing condition information which is previously set and store advertisement providing request information received in response to the advertisement providing condition information, the advertisement providing condition information including information regarding multiple web sites where the on-line advertisement is provided;
an advertisement providing information creating unit configured to calculate an advertisement providing rate for the multiple web sites using the advertisement providing condition information and the advertisement providing request information stored in the advertisement registering unit; and
an advertisement providing unit configured to transmit advertisement data to the client in accordance with the advertisement providing rate calculated in the advertisement providing information creating unit when the advertisement data transmitting request is received from the client,
wherein the advertisement server receives the advertisement data transmitting request received from the client if scroll bar location information corresponds to advertisement exposure location information by extracting the advertisement exposure location information included in a web document received from the web server by the client and using the scroll bar location information of the web browser on which the extracted advertisement exposure location information and the web document are displayed.

7. An apparatus for providing an on-line advertisement, comprising:
an advertisement registering unit configured to provide advertisement providing condition information which is previously set and store advertisement providing request information received in response to the advertisement providing condition information, the advertisement providing condition information including information regarding multiple web sites where the on-line advertisement is provided;
an advertisement providing information creating unit configured to calculate an advertisement providing rate for the multiple web sites using the advertisement providing condition information and the advertisement providing request information stored in the advertisement registering unit; and
an advertisement providing unit configured to transmit advertisement data to the client in accordance with the advertisement providing rate calculated in the advertisement providing information creating unit when the advertisement data transmitting request is received from the client,
wherein the advertisement data is transmitted to the client if scroll bar location information received corresponds to advertisement exposure location information by receiving the advertisement exposure location information included in a web document received by the client and receiving the scroll bar location information of a web browser on which the web document is displayed.

8. The apparatus according to claim 6 or 7, wherein the advertisement providing condition information and the advertisement providing request information includes at least one information of a web site on which advertisement is provided, an advertisement providing type, and an advertisement providing time.

9. The apparatus according to claim 6 or 7, wherein the advertisement providing information creating unit calculates the advertisement providing rate so as to include information regarding a unit price of providing an advertisement and the number of times of providing an advertisement on the multiple web sites.

10. The apparatus according to claim 6 or 7, further comprising:
a charging unit configured to count the number of times of advertisement data transmission and calculate a cost for transmitting the advertisement data by using the counted number of times.

11. A recording medium that records a program that implements a method for providing an on-line advertisement that is performed by an advertisement server in an on-line advertisement providing system including a client, a web server, and the advertisement server, the method comprising:
(a) providing advertisement providing condition information which is previously set and receiving advertisement providing request information corresponding to the advertisement providing condition information, the advertisement providing condition information including information regarding multiple web sites where the on-line advertisement is provided;
(b) calculating an advertisement providing rate for the multiple web sites using the advertisement providing condition information and the advertisement providing request information; and
(c) transmitting advertisement data to the client in accordance with the advertisement providing rate when the advertisement data transmitting request is received from the client,
wherein the advertisement server receives the advertisement data transmitting request received from the client if scroll bar location information corresponds to advertisement exposure location information by extracting the advertisement exposure location information included in a web document received from the web server by the client and using the scroll bar location information of the web browser on which the extracted advertisement exposure location information and the web document are displayed.

12. A recording medium that records a program that implements a method for providing an on-line advertisement that is performed by an advertisement server in an on-line advertisement providing system including a client, a web server, and the advertisement server, the method comprising:
(a) providing advertisement providing condition information which is previously set and receiving advertisement providing request information corresponding to the advertisement providing condition information, the advertisement providing condition information including information regarding multiple web sites where the on-line advertisement is provided;
(b) calculating an advertisement providing rate for the multiple web sites using the advertisement providing condition information and the advertisement providing request information; and
(c) transmitting advertisement data to the client in accordance with the advertisement providing rate when the advertisement data transmitting request is received from the client,
wherein the transmitting of the advertisement data to the client is performed if scroll bar location information received corresponds to advertisement exposure location information by receiving the advertisement exposure location information included in a web document received by the client and receiving the scroll bar location information of a web browser on which the web document is displayed.
